# EUROPEAN PATENT APPLICATION

(11) **EP 4 403 606 A1**
(43) Date of publication of application: **24.07.2024**
(21) Application number: 22866295.3
(22) Date of filing: 04.08.2022
(51) Int. Cl.: C09D 7/62, C09C 1/00, C09D 4/02, G02B 1/04, G02B 1/111

(54) **NANO-ZIRCONIA DISPERSION, PREPARATION METHOD THEREFOR, OBTAINED SINGLE DISPERSION, AND OPTICAL FILM**

(30) Priority: 13.09.2021 CN 202111067304
(71) Applicant: Shandong Sinocera Functional Material Co., Ltd, Dongying, Shandong 257091 (CN)
(72) Inventor: SONG, Xibin, Dongying, Shandong 257091 (CN); MA, Haiyang, Dongying, Shandong 257091 (CN); ZHANG, Dong, Dongying, Shandong 257091 (CN); ZHANG, Wei, Dongying, Shandong 257091 (CN); XI, Hongliang, Dongying, Shandong 257091 (CN); AI, Liaodong, Dongying, Shandong 257091 (CN); ZHAO, Jianbin, Dongying, Shandong 257091 (CN)
(74) Representative: Michalski Hüttermann & Partner Patentanwälte mbB
(86) International application number: PCT/CN2022/110129
(87) International publication number: WO 2023/035821

(57) **Abstract**

A nano-zirconia dispersion and a preparation method thereof as well as a monomer dispersion and an optical film obtained therefrom are provided. The present application belongs to the field of fine chemicals. The nano-zirconia dispersion includes nano-zirconia particles in an amount of 45-75 wt% and has a refractive index of 1.420-1.565, where it is observed that the nano-zirconia particles are surface-grafted with functional groups having respective peak ranges as follows when they are characterized by infrared spectroscopy: hydroxyl group: 3200 cm⁻¹-3600 cm⁻¹, Zr-O-Zr: 480 cm⁻¹-850 cm⁻¹, saturated carbon-hydrogen bond: 2850 cm⁻¹-2960 cm⁻¹, ester carbonyl group: 1700 cm⁻¹-1750 cm⁻¹, delocalized conjugated ester group: 1460 cm⁻¹-1580 cm⁻¹, Si-O-Zr: 800 cm⁻¹-1200 cm⁻¹, and C-O ether bond: 1000 cm⁻¹-1200 cm⁻¹. The nano-zirconia dispersion has a high dispersing content. The nano-zirconia monomer dispersion is obtained based on the nano-zirconia dispersion and has a dispersing content up to 55-85 wt% and a refractive index of 1.620-1.720.

## Description

### Cross reference to related applications

The application claims priority to and benefit of Chinese Patent Application No. 202111067304.6, filed on September 13, 2021, and entitled " Nano-zirconia dispersion, preparation method therefor, obtained single dispersion, and optical film", which is incorporated into the present application by reference herein in its entirety.

### Technical field

The present application belongs to the field of fine chemicals, and particularly, relates to a nano-zirconia dispersion and a preparation method thereof as well as a monomer dispersion and an optical film obtained therefrom.

### Background

In recent years, zirconia granules dispersions have been combined with transparent resins or thin films and applied successfully in the optical field due to high refractive index. For example, optical films, such as brightness enhancing films, anti-reflective films, etc., are prepared from high-refractive zirconia dispersions and can be applied not only on liquid crystal displays (LCDs) to increase the screen brightness and sharpness, but also in the improvement of the refractive index of light-emitting diode (LED) sealing resins to thereby increase the brightness of LEDs. In short, its high refractive property can be used in high-refractive coatings, applications of which can be found in different fields.

In the past, dispersions with water as a dispersion medium are used as the zirconia particles dispersions described above . In many optical material applications, such as the preparation of optical films, aqueous dispersions are usually mixed with resin components. However, due to the fact that aqueous dispersions are extremely hard to be dissolvable with water-insoluble resin components, in recent years, there has been a high demand for dispersions with organic solvents as a dispersion medium. Generally, zirconia particles exhibit overall good dispersibility in aqueous solvents but low dispersibility in organic solvents.

The performance of zirconia dispersions is closely related to the crystal structure, particle dispersion state, and dispersion preparation process of nano-zirconia in the system. CN107001066B discloses methods for preparing highly dispersed nano-zirconia particles and their transparent dispersions, in which zirconium salts react with alkali at 170°C to directly prepare zirconia particles, and then the dispersion medium, water, of the aqueous dispersion of zirconia particles is replaced with at least one alcohol solvent selected from methanol and ethanol, subsequently, the zirconia particles in the alcohol dispersion are subjected to surface treatment with a silane coupling agent and a 12-hydroxystearic acid surface treatment agent, and finally, the alcohol solvent of the alcohol dispersion of zirconia particles described above is replaced with a target organic solvent through distillation or ultrafiltration concentration. The dispersion of zirconia in organic solvent prepared by this method has a transmittance of at least 10% at a wavelength of 400 nm, a transmittance of at least 80% at a wavelength of 800 nm, and a viscosity immediately after preparation of below 10 mPa•s at 25°C. However, this process requires an alcohol solvent as an intermediate phase to obtain the target phase dispersion. The preparation process is complex and the cost is high. The boiling point of the alcohol solvent is low, which limits the modification temperature, resulting in insufficient modification.

Therefore, how to prepare a zirconia dispersion with stable system, uniform dispersibility, and high refractive index is particularly important to better meet the performance requirements of transparent organic-inorganic composites.

### Summary

The present application provides a nano-zirconia dispersion and a preparation method thereof as well as a monomer dispersion and an optical film obtained therefrom. The obtained nano-zirconia dispersion is featured by good dispersing uniformity and high refractive index.

To achieve the above objectives, the present application adopts the following technical solutions:
The first aspect of the embodiments of the present application provides a nano-zirconia dispersion. The nano-zirconia dispersion contains nano-zirconia particles in an amount of 45-75 wt% and has a refractive index of 1.420-1.565. It is observed that the nano-zirconia particles are surface-grafted with functional groups having respective peak ranges as follows when they are characterized by infrared spectroscopy:
hydroxyl group: 3200 cm⁻¹-3600 cm⁻¹, Zr-O-Zr: 480 cm⁻¹-850 cm⁻¹, saturated carbon-hydrogen bond: 2850 cm⁻¹-2960 cm⁻¹, ester carbonyl group: 1700 cm⁻¹-1750 cm⁻¹, delocalized conjugated ester group: 1460 cm⁻¹-1580 cm⁻¹, Si-O-Zr: 800 cm⁻¹-1200 cm⁻¹, and C-O ether bond: 1000 cm⁻¹-1200 cm⁻¹.

In some embodiments of the present application, the nano-zirconia dispersion has a refractive index of 1.420-1.535 when the nano-zirconia dispersion contains 45%-65% of zirconia and a refractive index of 1.498-1.565 when the nano-zirconia dispersion contains 65%-75% of zirconia.

In some embodiments of the present application, the refractive index of nano-zirconia particles in the nano-zirconia dispersion is 2.20-2.60, and the nano-zirconia particles with a tetragonal crystal structure account for 60-95% of all the nano-zirconia particles.

The second aspect of the embodiments of the present application provides a preparation method of the nano-zirconia dispersion as described above, which includes the following steps:
adding an organic solvent to an aqueous zirconia solution and uniformly mixing, adding an organic acid and a modifying agent to the resulting system to conduct modification on zirconia particles, then adding an oil-based dispersing aid, removing water by rotary evaporation, to obtain the nano-zirconia dispersion;
specifically, the organic acid added is 3-20 wt% relative to the content of the nano-zirconia; the modifying agent added is 5-20 wt% relative to the content of the nano-zirconia; the oil-based dispersing aid added is 5-20 wt% relative to the content of the nano-zirconia.

In some embodiments of the present application, adding the organic acid and the modifying agent to the resulting system to conduct the modification on the zirconia particles specifically includes:
under normal pressure and 50-150°C, adding the organic acid and the modifying agent to the resulting system to conduct the modification on the zirconia particles; or
dissolving the organic acid and the modifying agent in the organic solvent, followed by adding to the dispersion, which is obtained by mixing the aqueous zirconia solution and the organic solvent, under normal pressure and 50-150°C to conduct the modification on the zirconia particles.

In some embodiments of the present application, the organic solvent is at least one of butanone, methyl isobutyl ketone, propylene glycol methyl ether, and ethylene glycol methyl ether; the volume ratio of the organic solvent added to the aqueous zirconia solution is (3-5): 1.

In some embodiments of the present application, the organic acid is at least one selected from a saturated or unsaturated monocarboxylic acid, a polycarboxylic acid, and a hydroxycarboxylic acid.

In some embodiments of the present application, the monocarboxylic acid is at least one selected from formic acid, acetic acid, propionic acid, butyric acid, isooctanoic acid, acrylic acid, and methacrylic acid; the polycarboxylic acid is at least one selected from oxalic acid, malonic acid, succinic acid, phthalic acid, fumaric acid, and maleic acid; the hydroxycarboxylic acid is at least one selected from lactic acid, malic acid, tartaric acid, and citric acid.

In some embodiments of the present application, the modifying agent is at least one of 3-(methacryloyloxy)propyltrimethoxysilane and 3-glycidyloxypropyltrimethoxysilane.

In some embodiments of the present application, the oil-based dispersing aid is at least one selected from an anionic dispersant, a cationic dispersant, a non-ionic dispersant, and a polymeric dispersant.

In some embodiments of the present application, the oil-based dispersing aid is selected from BYK-9076 or BYK-9077.

The third aspect of the embodiments of the present application provides a nano-zirconia monomer dispersion, which is prepared by adding a photocurable resin to any of the nano-zirconia dispersions as described above and removing the organic solvent from the dispersion through vacuum distillation.

In some embodiments of the present application, the nano-zirconia monomer dispersion contains 55-85 wt% of nano-zirconia and has a refractive index of 1.620-1.720.

In some embodiments of the present application, the photocurable resin is selected from an acrylic or methacrylic monomer containing ester, ethyl carbamate, ether, silicon, halogen and/or phosphorus-containing groups or an oligomer of the acrylic or methacrylic monomer; the amount of the photocurable resin added is 15-45 wt% of the total mass of zirconia and the photocurable resin.

In some embodiments of the present application, the photocurable resin is at least one of phenoxybenzyl acrylate, methyl acrylate, and methyl methacrylate.

The fourth aspect of the embodiments of the present application provides an optical film prepared by using any of the nano-zirconia dispersions as described above or using any of the nano-zirconia monomer dispersions as described above.

Compared with the prior art, the present application has the following advantages and positive effects:
1. The preparation method of the nano-zirconia dispersion provided by at least one embodiment of the present application involves simple operations. The aqueous zirconia dispersion can be converted into the dispersion of zirconia in organic solvent by a simplest distillation displacement method, followed by further displacement of the dispersion of zirconia in organic solvent to obtain the monomer dispersion, during which no intermediate phase is needed to be involved.
2. The preparation method of the nano-zirconia dispersion provided by at least one embodiment of the present application uses an organic acid, a modifying agent, and an oil-based dispersing aid to simultaneously act on zirconia particles, making full use of their synergistic effects to achieve the optimal dispersing effect, which can effectively improve the compatibility of organic solvent-based dispersion and photocurable monomer in the subsequent process.
3. In the preparation method of the nano-zirconia dispersion provided by at least one embodiment of the present application, when adding the raw material components, it is necessary to add the organic acid and the modifying agent to the dispersion system before adding the oil-based dispersing aid to ensure that there are sufficient active sites on the surface of zirconia available for interaction with the organic acid and the modifying agent, thus achieving the best modification and dispersing effects.
4. In the preparation method of the nano-zirconia dispersion provided by at least one embodiment of the present application, the amounts of the organic acid, the modifying agent, and the oil-based dispersing aid added should be controlled within the ranges defined by the present application. Too low adding amount cannot produce the expected modification effect, while too high adding amount is prone to be counterproductive and cause unnecessary economic loss.
5. The nano-zirconia dispersion provided by at least one embodiment of the present application contains dispersed nano-zirconia particles as high as 45-75 wt% and has a refractive index of 1.420-1.565, the nano-zirconia monomer dispersion obtained on the basis of the nano-zirconia dispersion contains dispersed nano-zirconia particles up to 55-85 wt% and has a refractive index of 1.620-1.720.

### Brief description of the drawings

Fig. 1 is an infrared spectrum of the nano-zirconia dispersion provided by Embodiment 1 of the present application;
Fig. 2 is an infrared spectrum of the nano-zirconia dispersion provided by Example 5 of the present application;
Fig. 3 is an infrared spectrum of the nano-zirconia dispersion provided by Example 6 of the present application;
Fig. 4 is an infrared spectrum of the nano-zirconia dispersion provided by Example 7 of the present application;
Fig. 5 is an infrared spectrum after BYK-9076 used in the example of the present application is added to zirconia (with the adding amount being 40%);
Fig. 6 is an infrared spectrum after BYK-9076 used in the example of the present application is added to zirconia (with the adding amount being 5%).

### Detailed description

The technical solutions in the embodiments of the present application will be clearly and completely described below. Obviously, the described embodiments are only some of the embodiments of the present application, rather than all the embodiments. Based on the embodiments in the present application, all other embodiments obtained by those of ordinary skill in the art without creative efforts fall within the scope of protection of the present application.

In the description of the present application, unless otherwise specified, the content whose unit is not explicitly stated is mass content; to obtain nano-zirconia dispersion, it can be understood that the aqueous zirconia solution mentioned in the raw materials of the present application refers to aqueous nano-zirconia solution.

To achieve the above objectives, the present application provides a nano-zirconia dispersion. The nano-zirconia dispersion contains nano-zirconia particles in an amount of 45-75 wt%. It is observed that the nano-zirconia particles are surface-grafted with functional groups having respective peak ranges as follows when they are characterized by infrared spectroscopy:
hydroxyl group: 3200 cm⁻¹-3600 cm⁻¹, Zr-O-Zr: 480 cm⁻¹-850 cm⁻¹, saturated carbon-hydrogen bond: 2850 cm⁻¹-2960 cm⁻¹, ester carbonyl group: 1700 cm⁻¹-1750 cm⁻¹, delocalized conjugated ester group: 1460 cm⁻¹-1580 cm⁻¹, Si-O-Zr: 800 cm⁻¹-1200 cm⁻¹, and C-O ether bond: 1000 cm⁻¹-1200 cm⁻¹. It can be understood that the successful introduction of these functional groups can greatly improve the lipophilicity of zirconia particles, providing the possibility for the subsequent preparation of various types of dispersions and their films. At the same time, it has a positive impact on the improvement of the solid content and refractive index of solvent-based and monomer-based dispersions.

In some embodiments, the nano-zirconia dispersion has a refractive index of 1.420-1.535 when the nano-zirconia dispersion contains 45%-65% of zirconia and a refractive index of 1.498-1.565 when the nano-zirconia dispersion contains 65%-75% of zirconia.

In some embodiments, the refractive index of nano-zirconia particles in the nano-zirconia dispersion is 2.20-2.60.

In some embodiments, the nano-zirconia particles with a tetragonal crystal structure account for 60-95% of all the nano-zirconia particles. It can be understood that the crystal form of zirconia is classified into monoclinic phase, tetragonal phase, and cubic phase. In the embodiments of the present application, the proportion of the nano-zirconia particles with the tetragonal crystal structure in the nano-zirconia dispersion is a mass proportion relative to all the crystal forms of zirconia.

The present application also provides a preparation method of a nano-zirconia dispersion, which includes the following steps:
adding an organic solvent to an aqueous zirconia solution and uniformly mixing, adding an organic acid and a modifying agent to the resulting system to conduct modification on zirconia particles, adding an oil-based dispersing aid, and removing water by rotary evaporation to obtain the nano-zirconia dispersion.

In the preparation method of the nano-zirconia dispersion provided by the above embodiments, the organic acid and the modifying agent are added to the mixed dispersion of zirconia particles in water and organic solvent for performing lipophilic modification treatment, water is removed to obtain a pure organic solvent phase zirconia dispersion, and then the oil-based dispersing aid is added to strengthen the stability and dispersibility of the dispersion. The above solution does not require complicated operations and dispersing equipment, and is simple in operation. A dispersion obtained after processing based on this method shows significant advantages over the dispersion obtained through dispersing medium displacement in the prior art.

In some embodiments, adding the organic acid and the modifying agent to the resulting system to conduct the modification on the zirconia particles specifically includes:
under normal pressure and 50-150°C, adding the organic acid and the modifying agent to the resulting system to conduct the modification on the zirconia particles; or
dissolving the organic acid and the modifying agent in the organic solvent, followed by adding to the dispersion, which is obtained by mixing the aqueous zirconia solution and the organic solvent, under normal pressure and 50-150°C to conduct the modification on the zirconia particles.

In some embodiments, the volume ratio of the organic solvent added to the aqueous zirconia solution is (3-5):1.

In some embodiments, the organic solvent is at least one of butanone, methyl isobutyl ketone, propylene glycol methyl ether, and ethylene glycol methyl ether.

In some embodiments, the organic acid is at least one selected from saturated or unsaturated monocarboxylic acid, polycarboxylic acid, and hydroxycarboxylic acid; the organic acid added is 3-20 wt% relative to the nano-zirconia content.

In some embodiments, the monocarboxylic acid is at least one selected from formic acid, acetic acid, propionic acid, butyric acid, isooctanoic acid, acrylic acid, and methacrylic acid; the polycarboxylic acid is at least one selected from oxalic acid, malonic acid, succinic acid, phthalic acid, fumaric acid, and maleic acid; the hydroxycarboxylic acid is at least one selected from lactic acid, malic acid, tartaric acid, and citric acid.

In some embodiments, the modifying agent is at least one of 3-(methacryloyloxy)propyltrimethoxysilane and 3-glycidyloxypropyltrimethoxysilane; the modifying agent added is 5-20 wt% relative to the nano-zirconia content.

In the preparation method of the nano-zirconia dispersion provided by the embodiments of the present application, the purpose of adding the organic acid and the modifying agent is to conduct surface treatment on zirconia, which, on the one hand, improves the lipophilicity of zirconia particles, and on the other hand, enables zirconia particles to evenly disperse such that the modifying agent is fully combined with zirconia. In addition, the presence of the organic acid is favorable to the hydrolysis and grafting of the modifying agent, the presence of the modifying agent is favorable to the grafting of the organic acid and zirconia, showing mutual promotion. The oil-based dispersing aid also exhibits a positive effect on the enhancement of the grafting of the organic acid and the modifying agent with zirconia. It can be understood that the adding amount of the organic acid can also be 2, 3, 4, 5, 6, 7, 8, 9, 10, 11, 12, 13, 14, 15, 16, 17, 18, 19 wt% relative to the nano-zirconia content, or any value within the above range; the adding amount of the modifying agent can also be 6, 7, 8, 9, 10, 11, 12, 13, 14, 15, 16, 17, 18, 19 wt% relative to the nano-zirconia content, or any value within the above range.

In some embodiments, the oil-based dispersing aid is at least one selected from an anionic dispersant, a cationic dispersant, a non-ionic dispersant, and a polymeric dispersant, preferably a phosphate ester dispersing aid; the oil-based dispersing aid added is 5-20 wt% relative to the nano-zirconia content.

It can be understood that the purpose of adding the oil-based dispersing aid in the above step is to further improve the stability and dispersibility of the dispersion. It is particularly pointed out that the above-mentioned oil-based dispersing aid should be added after the complete addition of the organic acid and the modifying agent to the dispersing system, which is to ensure that there are sufficient active sites on the surface of zirconia particles available for a surface treatment with the organic acid and the modifying agent. The adding amount of the oil-based dispersing aid can also be 2, 3, 4, 5, 6, 7, 8, 9, 10, 11, 12, 13, 14, 15, 16, 17, 18, 19 wt% relative to the nano-zirconia content, or any value within the above range.

In some embodiments, the oil-based dispersing aid can be specifically selected from dispersants BYK-9076 and BYK-9077 produced by BYK Additives & Instruments.

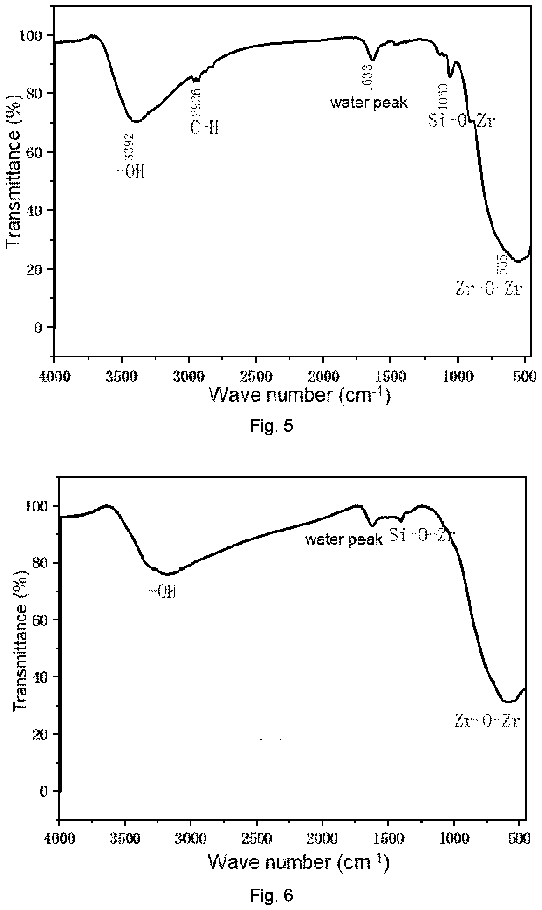

In the above embodiments, BYK-9076 is a high-molecular-weight copolymer silyl ammonium salt. Fig. 5 shows an infrared spectrum after adding BYK-9076 (40%) to zirconia, in which the hydroxyl peak at 3392 cm⁻² corresponds to the hydroxyl groups remaining on the surface of zirconia, the peak at 2926 cm⁻² indicates saturated carbon-hydrogen bonds of BYK9076, the peak at 1633 cm⁻² indicates water adsorbed by the zirconia inorganic powder, the peak at 1060 cm⁻² indicates Si-O-Zr generated by the grafting of BYK9076 and zirconia, and the peak at 565 cm⁻² indicates Zr-O-Zr of zirconia. Si-O-Zr peak appears in the product shown in Fig. 5, indicating that BYK-9076 can be grafted with zirconia to form Si-O-Zr functional groups. Fig. 6 shows an infrared spectrum after adding BYK-9076 (5%) to zirconia. It can be seen from Figs. 5 and 6 that the addition of BYK9076, regardless of the adding amount, will lead to the appearance of the Si-O-Zr. BYK9077 is a high-molecular-weight copolymer with pigment affinity groups. Therefore, when BYK-9076 is used as the oil-based dispersing aid, it can provide Si-O-Zr functional groups together with the modifying agent, further increasing the quantity of Si-O-Zr functional groups in the prepared nano-zirconia dispersion, and increasing the refractive index of the nano-zirconia dispersion. BYK9077 has a similar structure to BYK9076, but has greater steric hindrance and is less grafted with zirconia. As a result, hydroxyl peak, water peak, and Zr-O-Zr of zirconia can be observed in its infrared spectrum.

The present application further provides a nano-zirconia monomer dispersion, which is prepared by adding a photocurable resin to the nano-zirconia dispersion according to any of the above technical solutions and removing the organic solvent from the dispersion through vacuum distillation. Herein, it should be noted that the monomer dispersion described in the present application refers to a dispersion to which a single component is added, and does not specifically refer to the monomer or oligomer thereof contained in the photocurable component.

In some embodiments, the nano-zirconia monomer dispersion contains 55-85 wt% of nano-zirconia and has a refractive index of 1.620-1.720. It can be understood that the content of nano-zirconia in the monomer dispersion can also be 56, 57, 58, 59, 60, 61, 62, 63, 64, 65, 66, 67, 68, 69, 70, 71, 72, 73, 74, 75, 76, 77, 78, 79, 80, 81, 82, 83, 84 wt%, or any value within the above range.

In some embodiments, the photocurable resin is selected from an acrylic or methacrylic monomer containing ester, ethyl carbamate, ether, silicon, halogen and/or phosphorus-containing groups or an oligomer of the acrylic or methacrylic monomer. Furthermore, the monomer or its oligomer is commercially available.

In some embodiments, the adding amount of the photocurable resin is 15-45 wt% relative to the total mass of zirconia and the photocurable resin. It can be understood that the content of the photocurable resin can also be 20, 25, 30, 35 wt%, or any value within the above range.

In some embodiments, the photocurable resin is at least one of phenoxybenzyl acrylate, methyl acrylate, and methyl methacrylate.

The present application also provides an optical film characterized by being prepared by using the nano-zirconia dispersion that is prepared by the preparation method according to any of the above technical solutions or using the nano-zirconia monomer dispersion according to any of the above technical solutions.

In some embodiments, the optical film is any one of a brightness enhancing film, an anti-reflective film, and other optical films with high-refractive coatings.

To introduce the nano-zirconia dispersion and the preparation method thereof as well as the resulting monomer dispersion provided in the embodiments of the present application more clearly and in detail, the following will be described in combination to specific examples.

### Example 1

A propylene glycol methyl ether (PGME) solvent was added to an aqueous zirconia solution and uniformly mixing, isooctanoic acid (with the adding amount being 5% relative to the zirconium content) and 3-(methacryloyloxy)propyltrimethoxysilane (with the adding amount being 10% relative to the zirconium content) were added to the above system for conducting modification on zirconia particles, and then an oil-based dispersing aid BYK-9076 (with the adding amount being 5%) was added, and water was removed by rotary evaporation to obtain a PGME-based nano-zirconia organic dispersion.

The PGME-based nano-zirconia organic dispersion has a refractive index of 1.475 when the concentration of nano-zirconia is 45 wt%, a refractive index of 1.535 when the concentration of nano-zirconia is 65%, and a refractive index of 1.565 when the concentration of nano-zirconia is 75 wt%.

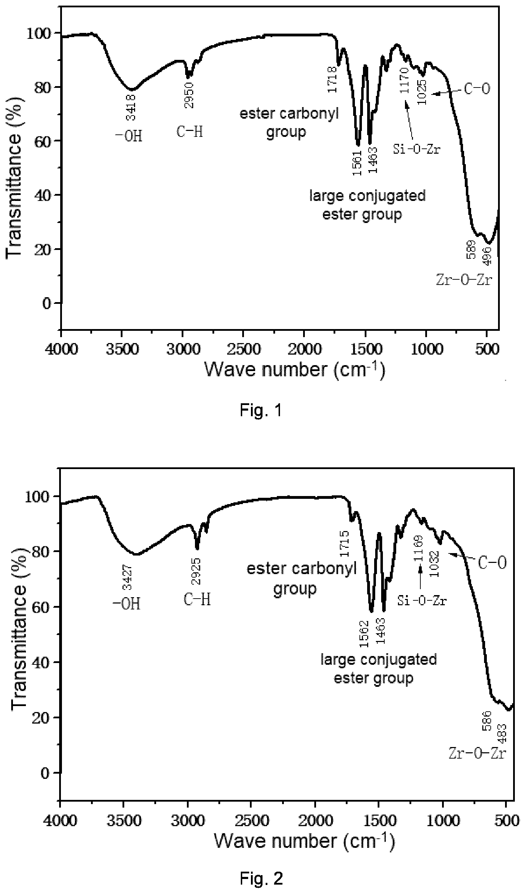

Fig. 1 is the infrared spectrum of Example 1, in which the absorption peak at 3418 cm⁻¹ is the characteristic absorption peak of hydroxyl groups on the surface of zirconia particles, and 589 cm⁻¹ and 496 cm⁻¹ are the characteristic absorption peaks of Zr-O-Zr. In addition, 2950 cm⁻¹ is the characteristic peak of saturated carbon-hydrogen bonds, 1718 cm⁻¹ is the characteristic peak of ester carbonyl groups, 1561 cm⁻¹ and 1463 cm⁻¹ are the characteristic absorption peaks of delocalized conjugated ester groups, 1170 cm⁻¹ is the characteristic absorption peak of Si-O-Zr, 1025 cm⁻¹ is the characteristic absorption peak of C-O ether bonds, indicating that isooctanoic acid and 3-(methacryloyloxy)propyltrimethoxysilane had been successfully grafted to the surface of zirconia particles.

### Example 2

The preparation method was the same as that in Example 1, except that the adding amount of isooctanoic acid was 3% relative to the zirconium content, the adding amount of 3-glycidyloxypropyltrimethoxysilane was 5% relative the zirconium content, and the adding amount of the oil-based dispersing aid BYK-9076 was 10% relative to the zirconium content, and a PGME-based nano-zirconia organic dispersion was obtained.

The PGME-based nano-zirconia organic dispersion has a refractive index of 1.470 when the concentration of nano-zirconia is 45 wt%, a refractive index of 1.529 when the concentration of nano-zirconia is 65%, and a refractive index of 1.558 when the concentration of nano-zirconia is 75 wt%.

### Example 3

The preparation method was the same as that in Example 1, except that the adding amount of isooctanoic acid was 12% relative to the zirconium content, the adding amount of the modifying agent 3-(methacryloyloxy)propyltrimethoxysilane is 15% relative to the zirconium content, and the adding amount of the oil-based dispersing aid BYK-9077 was 15% relative to the zirconium content, and a PGME-based nano-zirconia organic dispersion was obtained.

The PGME-based nano-zirconia organic dispersion has a refractive index of 1.461 when the concentration of nano-zirconia is 45 wt%, a refractive index of 1.522 when the concentration of nano-zirconia is 65%, and a refractive index of 1.552 when the concentration of nano-zirconia is 75 wt%.

### Example 4

The preparation method was the same as that in Example 1, except that the adding amount of isooctanoic acid was 20% relative to the zirconium content, the adding amount of the modifying agent 3-glycidyloxypropyltrimethoxysilane was 20% relative to the zirconium content, and the adding amount of the oil-based dispersing aid BYK-9077 was 20% relative to the zirconium content, and a PGME-based nano-zirconia organic dispersion was obtained.

The PGME-based nano-zirconia organic dispersion has a refractive index of 1.449 when the concentration of nano-zirconia is 45 wt%, a refractive index of 1.509 when the concentration of nano-zirconia is 65%, and a refractive index of 1.540 when the concentration of nano-zirconia is 75 wt%.

### Example 5

The preparation method was the same as that in Example 1, except that the organic acid added was 12-hydroxystearic acid, and the adding amount of the 12-hydroxystearic acid was 5% relative to the zirconium content, and a PGME-based nano-zirconia organic dispersion was obtained.

The PGME-based nano-zirconia organic dispersion has a refractive index of 1.467 when the concentration of nano-zirconia is 45 wt%, a refractive index of 1.525 when the concentration of nano-zirconia is 65%, and a refractive index of 1.554 when the concentration of nano-zirconia is 75 wt%.

Fig. 2 is the infrared spectrum of Example 5, in which the absorption peak at 3427 cm⁻¹ is the characteristic peak of hydroxyl groups on the surface of zirconia particles, and 586 cm⁻¹ and 483 cm⁻¹ are the characteristic absorption peaks of Zr-O-Zr. In addition, 2925 cm⁻¹ is the characteristic peak of saturated carbon-hydrogen bonds, 1715 cm⁻¹ is the characteristic peak of ester carbonyl groups, 1562 cm⁻¹ and 1463 cm⁻¹ are the characteristic absorption peaks of delocalized conjugated ester groups, 1169 cm⁻¹ is the characteristic absorption peak of Si-O-Zr, 1032 cm⁻¹ is the characteristic absorption peak of C-O ether bonds, indicating that 12-hydroxystearic acid and 3-(methacryloyloxy)propyltrimethoxysilane had been successfully grafted to the surface of zirconia particles.

### Example 6

The preparation method was the same as that in Example 1, except that the organic acid added was acetic acid, and the adding amount of the acetic acid was 5% relative to the zirconium content, and a PGME-based nano-zirconia organic dispersion was obtained.

The PGME-based nano-zirconia organic dispersion has a refractive index of 1.420 when the concentration of nano-zirconia is 45 wt%, a refractive index of 1.498 when the concentration of nano-zirconia is 65%, and a refractive index of 1.530 when the concentration of nano-zirconia is 75 wt%.

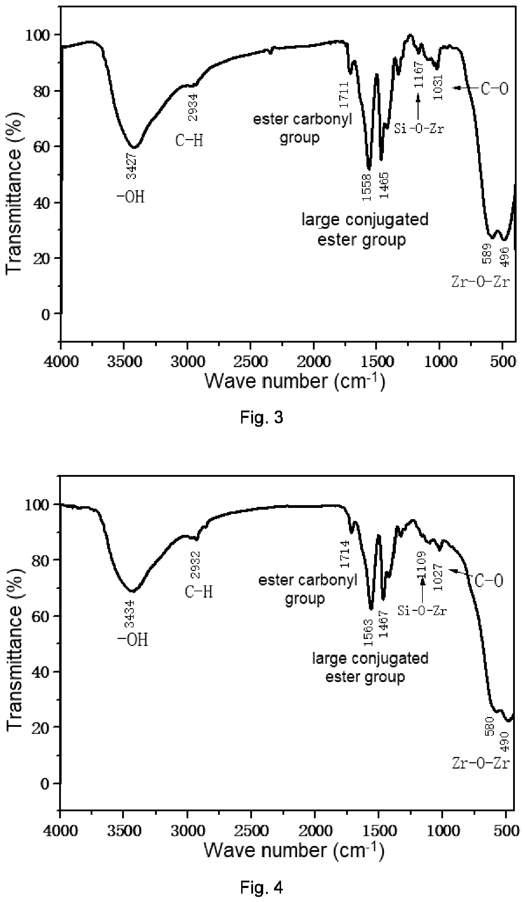

Fig. 3 is an infrared spectrum of Example 6, in which the absorption peak at 3427 cm⁻¹ is the characteristic peak of hydroxyl groups on the surface of zirconia particles, and 589 cm⁻¹ and 496 cm⁻¹ are the characteristic absorption peaks of Zr-O-Zr. In addition, 2934 cm⁻¹ is the characteristic peak of saturated carbon-hydrogen bonds, 1711 cm⁻¹ is the characteristic peak of ester carbonyl groups, 1558 cm⁻¹ and 1465 cm⁻¹ are the characteristic absorption peaks of delocalized conjugated ester groups, 1167 cm⁻¹ is the characteristic absorption peak of Si-O-Zr, 1031 cm⁻¹ is the characteristic absorption peak of C-O ether bonds, indicating that acetic acid and 3-(methacryloyloxy)propyltrimethoxysilane had been successfully grafted to the surface of zirconia particles.

### Example 7

The preparation method was the same as that in Example 1, except that the organic acid added was propionic acid, and the adding amount of the propionic acid was 5% relative to the zirconium content, and a PGME-based nano-zirconia organic dispersion is obtained.

The PGME-based nano-zirconia organic dispersion has a refractive index of 1.457 when the concentration of nano-zirconia is 45 wt%, a refractive index of 1.513 when the concentration of nano-zirconia is 65%, and a refractive index of 1.548 when the concentration of nano-zirconia is 75 wt%.

Fig. 4 is the infrared spectrum of Example 7, in which the absorption peak at 3434 cm⁻¹ is the characteristic peak of hydroxyl groups on the surface of zirconia particles, and 580 cm⁻¹ and 490 cm⁻¹ are the characteristic absorption peaks of Zr-O-Zr. In addition, 2932 cm⁻¹ is the characteristic peak of saturated carbon-hydrogen bonds, 1714 cm⁻¹ is the characteristic peak of ester carbonyl groups, 1563 cm⁻¹ and 1467 cm⁻¹ are the characteristic absorption peaks of delocalized conjugated ester groups, 1109 cm⁻¹ is the characteristic absorption peak of Si-O-Zr, 1027 cm⁻¹ is the characteristic absorption peak of C-O ether bonds, indicating that propionic acid and 3-(methacryloyloxy)propyltrimethoxysilane have been successfully grafted to the surface of zirconia particles.

### Example 8

Phenoxybenzyl acrylate was added to the PGME-based nano-zirconia organic dispersion prepared in Example 1, and the resulting mixture was subjected to vacuum distillation to remove the organic solvent to obtain a nano-zirconia dispersion containing photocurable phenoxybenzyl acrylate.

The dispersion has a refractive index of 1.675 when the content of nano-zirconia is 55 wt%, a refractive index of 1.700 when the content of nano-zirconia is 75 wt%, and a refractive index of 1.720 when the content of nano-zirconia is 85 wt%.

### Example 9

Phenoxybenzyl acrylate was added to the PGME-based nano-zirconia organic dispersion prepared in Example 2, and the resulting mixture was subjected to vacuum distillation to remove the organic solvent to obtain a nano-zirconia dispersion containing photocurable phenoxybenzyl acrylate.

The dispersion has a refractive index of 1.660 when the content of nano-zirconia is 55 wt%, a refractive index of 1.687 when the content of nano-zirconia is 75 wt%, and a refractive index of 1.706 when the content of nano-zirconia is 85 wt%.

### Example 10

Phenoxybenzyl acrylate was added to the PGME-based nano-zirconia organic dispersion prepared in Example 3, and the resulting mixture was subjected to vacuum distillation to remove the organic solvent to obtain a nano-zirconia dispersion containing photocurable phenoxybenzyl acrylate.

The dispersion has a refractive index of 1.644 when the content of nano-zirconia is 55 wt%, a refractive index of 1.667 when the content of nano-zirconia is 75 wt%, and a refractive index of 1.687 when the content of nano-zirconia is 85 wt%.

### Example 11

Phenoxybenzyl acrylate was added to the PGME-based nano-zirconia organic dispersion prepared in Example 4, and the resulting mixture was subjected to vacuum distillation to remove the organic solvent to obtain a nano-zirconia dispersion containing photocurable phenoxybenzyl acrylate.

The dispersion has a refractive index of 1.620 when the content of nano-zirconia is 55 wt%, a refractive index of 1.643 when the content of nano-zirconia is 75 wt%, and a refractive index of 1.662 when the content of nano-zirconia is 85 wt%.

### Example 12

Phenoxybenzyl acrylate was added to the PGME-based nano-zirconia organic dispersion prepared in Example 5, and the resulting mixture was subjected to vacuum distillation to remove the organic solvent to obtain a nano-zirconia dispersion containing photocurable phenoxybenzyl acrylate.

The dispersion has a refractive index of 1.650 when the content of nano-zirconia is 55 wt%, a refractive index of 1.676 when the content of nano-zirconia is 75 wt%, and a refractive index of 1.695 when the content of nano-zirconia is 85 wt%.

### Example 13

Phenoxybenzyl acrylate was added to the PGME-based nano-zirconia organic dispersion prepared in Example 6, and the resulting mixture was subjected to vacuum distillation to remove the organic solvent to obtain a nano-zirconia dispersion containing photocurable phenoxybenzyl acrylate.

The dispersion has a refractive index of 1.621 when the content of nano-zirconia is 55 wt%, a refractive index of 1.641 when the content of nano-zirconia is 75 wt%, and a refractive index of 1.656 when the content of nano-zirconia is 85 wt%.

### Example 14

Phenoxybenzyl acrylate was added to the PGME-based nano-zirconia organic dispersion prepared in Example 7, and the resulting mixture was subjected to vacuum distillation to remove the organic solvent to obtain a nano-zirconia dispersion containing photocurable phenoxybenzyl acrylate.

The dispersion has a refractive index of 1.631 when the content of nano-zirconia is 55 wt%, a refractive index of 1.657 when the content of nano-zirconia is 75 wt%, and a refractive index of 1.678 when the content of nano-zirconia is 85 wt%.

### Comparative Example 1

The preparation method was the same as that in Example 1, except that the adding amount of isooctanoic acid was 0, and a PGME-based nano-zirconia organic dispersion was obtained. The surface of zirconia particles has hydroxyl groups, Zr-O-Zr, and Si-O-Zr, but does not have ester carbonyl groups, C-O ether bonds, conjugated ester groups, and saturated carbon-hydrogen bonds.

The PGME-based nano-zirconia organic dispersion has a refractive index of 1.395 when the concentration of nano-zirconia is 45 wt%, a refractive index of 1.434 when the concentration of nano-zirconia is 65%, and a refractive index of 1.472 when the concentration of nano-zirconia is 75 wt%.

### Comparative Example 2

Phenoxybenzyl acrylate was added to the PGME-based nano-zirconia organic dispersion prepared in Comparative Example 1, and the resulting mixture was subjected to vacuum distillation to remove the organic solvent. The final product zirconia was precipitated, and a nano-zirconia dispersion containing photocurable phenoxybenzyl acrylate could not be produced.

### Comparative Example 3

A propylene glycol methyl ether (PGME) solvent was added to an aqueous zirconia solution and uniformly mixing, and an oil-based dispersing aid BYK-9076 (with the adding amount being 5%) was added to the above system, followed by adding isooctanoic acid (with the adding amount being 5% relative to the zirconium content) and 3-(methacryloyloxy)propyltrimethoxysilane (with the adding amount being 10% reelative to the zirconium content) for conducting modification on zirconia particles, and water was removed by rotary evaporation to obtain a PGME-based nano-zirconia organic dispersion. The surface of zirconia particles has hydroxyl groups, Zr-O-Zr, Si-O-Zr, conjugated ester groups, ester carbonyl groups, and C-O ether bonds, but does not have saturated carbon-hydrogen bonds.

The PGME-based nano-zirconia organic dispersion has a refractive index of 1.398 when the concentration of nano-zirconia is 45 wt%, a refractive index of 1.445 when the concentration of nano-zirconia is 65%, and a refractive index of 1.484 when the concentration of nano-zirconia is 75 wt%.

### Comparative Example 4

Phenoxybenzyl acrylate was added to the PGME-based nano-zirconia organic dispersion prepared in Comparative Example 3, and the resulting mixture was subjected to vacuum distillation to remove the organic solvent to obtain a nano-zirconia dispersion containing photocurable phenoxybenzyl acrylate.

The dispersion has a refractive index of 1.575 when the content of nano-zirconia is 55 wt% and a refractive index of 1.598 when the content of nano-zirconia is 75 wt %.

### Comparative Example 5

The preparation method was the same as that in Comparative Example 3, except that an oil-based dispersing aid BYK-9076 (with the adding amount being 5%) was added to the system, followed by adding 12-hydroxystearic acid (with the adding amount being 5% relative to the zirconium content) and 3-(methacryloyloxy)propyltrimethoxysilane (with the adding amount being 10% relative to the zirconium content) for conducting modification on zirconia particles, and a PGME-based nano-zirconia organic dispersion was obtained. The surface of zirconia particles has hydroxyl groups, Zr-O-Zr, Si-O-Zr, conjugated ester groups, ester carbonyl groups, and C-O ether bonds, but does not have saturated carbon-hydrogen bonds.

The PGME-based nano-zirconia organic dispersion has a refractive index of 1.396 when the concentration of nano-zirconia is 45 wt%, a refractive index of 1.442 when the concentration of nano-zirconia is 65%, and a refractive index of 1.480 when the concentration of nano-zirconia is 75 wt%.

### Comparative Example 6

Phenoxybenzyl acrylate was added to the PGME-based nano-zirconia organic dispersion prepared in Comparative Example 5, and the resulting mixture was subjected to vacuum distillation to remove the organic solvent to obtain a nano-zirconia dispersion containing photocurable phenoxybenzyl acrylate.

The dispersion has a refractive index of 1.570 when the content of nano-zirconia is 55 wt% and a refractive index of 1.594 when the content of nano-zirconia is 75 wt %.

### Comparative Example 7

The preparation method was the same as that in Example 5, except that the adding amounts of 12-hydroxystearic acid, 3-(methacryloyloxy)propyltrimethoxysilane, and the oil-based dispersing aid BYK-9076 were respectively 25% of the zirconium content, and a PGME-based nano-zirconia organic dispersion was obtained. The surface of zirconia particles has hydroxyl groups, Zr-O-Zr, Si-O-Zr, C-O ether bonds, ester carbonyl groups, and saturated carbon-hydrogen bonds, but does not have conjugated ester groups.

The PGME-based nano-zirconia organic dispersion has a refractive index of 1.398 when the concentration of nano-zirconia is 45 wt%, a refractive index of 1.447 when the concentration of nano-zirconia is 65%, and a refractive index of 1.481 when the concentration of nano-zirconia is 75 wt%.

### Comparative Example 8

Phenoxybenzyl acrylate was added to the PGME-based nano-zirconia organic dispersion prepared in Comparative Example 7, and the resulting mixture was subjected to vacuum distillation to remove the organic solvent to obtain a nano-zirconia dispersion containing photocurable phenoxybenzyl acrylate.

The dispersion has a refractive index of 1.567 when the content of nano-zirconia is 55 wt% and a refractive index of 1.591 when the content of nano-zirconia is 75 wt %.

### Comparative Example 9

The preparation method was the same as that in Example 1, except that the adding amounts of isooctanoic acid, 3-glycidyloxypropyltrimethoxysilane, and an oil-based dispersing aid BYK-9076 were respectively 30% relative to the zirconium content, and a PGME-based nano-zirconia organic dispersion was obtained. The surface of zirconia particles has hydroxyl groups, Zr-O-Zr, Si-O-Zr, C-O ether bonds, ester carbonyl groups, and saturated carbon-hydrogen bonds, but does not have conjugated ester groups.

The PGME-based nano-zirconia organic dispersion has a refractive index of 1.389 when the concentration of nano-zirconia is 45 wt%, a refractive index of 1.446 when the concentration of nano-zirconia is 65%, and a refractive index of 1.485 when the concentration of nano-zirconia is 75 wt%.

### Example 10

Phenoxybenzyl acrylate was added to the PGME-based nano-zirconia organic dispersion prepared in Example 3, and the resulting mixture was subjected to vacuum distillation to remove the organic solvent to obtain a nano-zirconia dispersion containing photocurable phenoxybenzyl acrylate.

The dispersion has a refractive index of 1.644 when the content of nano-zirconia is 55 wt%, a refractive index of 1.667 when the content of nano-zirconia is 75 wt%, and a refractive index of 1.687 when the content of nano-zirconia is 85 wt%.

### Example 11

Phenoxybenzyl acrylate was added to the PGME-based nano-zirconia organic dispersion prepared in Example 4, and the resulting mixture was subjected to vacuum distillation to remove the organic solvent to obtain a nano-zirconia dispersion containing photocurable phenoxybenzyl acrylate.

The dispersion has a refractive index of 1.620 when the content of nano-zirconia is 55 wt%, a refractive index of 1.643 when the content of nano-zirconia is 75 wt%, and a refractive index of 1.662 when the content of nano-zirconia is 85 wt%.

### Example 12

Phenoxybenzyl acrylate was added to the PGME-based nano-zirconia organic dispersion prepared in Example 5, and the resulting mixture was subjected to vacuum distillation to remove the organic solvent to obtain a nano-zirconia dispersion containing photocurable phenoxybenzyl acrylate.

The dispersion has a refractive index of 1.650 when the content of nano-zirconia is 55 wt%, a refractive index of 1.676 when the content of nano-zirconia is 75 wt%, and a refractive index of 1.695 when the content of nano-zirconia is 85 wt%.

### Example 13

Phenoxybenzyl acrylate was added to the PGME-based nano-zirconia organic dispersion prepared in Example 6, and the resulting mixture was subjected to vacuum distillation to remove the organic solvent to obtain a nano-zirconia dispersion containing photocurable phenoxybenzyl acrylate.

The dispersion has a refractive index of 1.621 when the content of nano-zirconia is 55 wt%, a refractive index of 1.641 when the content of nano-zirconia is 75 wt%, and a refractive index of 1.656 when the content of nano-zirconia is 85 wt%.

### EExample 14

3Phenoxybenzyl acrylate was added to the PGME-based nano-zirconia organic dispersion prepared in Example 7, and the resulting mixture was subjected to vacuum distillation to remove the organic solvent to obtain a nano-zirconia dispersion containing photocurable phenoxybenzyl acrylate.

The dispersion has a refractive index of 1.631 when the content of nano-zirconia is 55 wt%, a refractive index of 1.657 when the content of nano-zirconia is 75 wt%, and a refractive index of 1.678 when the content of nano-zirconia is 85 wt%.

### Comparative Example 1

The preparation method was the same as that in Example 1, except that the adding amount of isooctanoic acid was 0, and a PGME-based nano-zirconia organic dispersion was obtained. The surface of zirconia particles has hydroxyl groups, Zr-O-Zr, and Si-O-Zr, but does not have ester carbonyl groups, C-O ether bonds, conjugated ester groups, and saturated carbon-hydrogen bonds.

The PGME-based nano-zirconia organic dispersion has a refractive index of 1.395 when the concentration of nano-zirconia is 45 wt%, a refractive index of 1.434 when the concentration of nano-zirconia is 65%, and a refractive index of 1.472 when the concentration of nano-zirconia is 75 wt%.

### Comparative Example 2

Phenoxybenzyl acrylate was added to the PGME-based nano-zirconia organic dispersion prepared in Comparative Example 1, and the resulting mixture was subjected to vacuum distillation to remove the organic solvent. The final product zirconia was precipitated, and a nano-zirconia dispersion containing photocurable phenoxybenzyl acrylate could not be produced.

### Comparative Example 3

A propylene glycol methyl ether (PGME) solvent was added to an aqueous zirconia solution and uniformly mixing, and an oil-based dispersing aid BYK-9076 (with the adding amount being 5%) was added to the above system, followed by adding isooctanoic acid (with the adding amount being 5% relative to the zirconium content) and 3-(methacryloyloxy)propyltrimethoxysilane (with the adding amount being 10% rElative to the zirconium content) for conducting modification on zirconia particles, and water was removed by rotary evaporation to obtain a PGME-based nano-zirconia organic dispersion. The surface of zirconia particles has hydroxyl groups, Zr-O-Zr, Si-O-Zr, conjugated ester groups, ester carbonyl groups, and C-O ether bonds, but does not have saturated carbon-hydrogen bonds.

The PGME-based nano-zirconia organic dispersion has a refractive index of 1.398 when the concentration of nano-zirconia is 45 wt%, a refractive index of 1.445 when the concentration of nano-zirconia is 65%, and a refractive index of 1.484 when the concentration of nano-zirconia is 75 wt%.

### Comparative Example 4

Phenoxybenzyl acrylate was added to the PGME-based nano-zirconia organic dispersion prepared in Comparative Example 3, and the resulting mixture was subjected to vacuum distillation to remove the organic solvent to obtain a nano-zirconia dispersion containing photocurable phenoxybenzyl acrylate.

The dispersion has a refractive index of 1.575 when the content of nano-zirconia is 55 wt% and a refractive index of 1.598 when the content of nano-zirconia is 75 wt %.

### Comparative Example 5

The preparation method was the same as that in Comparative Example 3, except that an oil-based dispersing aid BYK-9076 (with the adding amount being 5%) was added to the system, followed by adding 12-hydroxystearic acid (with the adding amount being 5% relative to the zirconium content) and 3-(methacryloyloxy)propyltrimethoxysilane (with the adding amount being 10% relative to the zirconium content) for conducting modification on zirconia particles, and a PGME-based nano-zirconia organic dispersion was obtained. The surface of zirconia particles has hydroxyl groups, Zr-O-Zr, Si-O-Zr, conjugated ester groups, ester carbonyl groups, and C-O ether bonds, but does not have saturated carbon-hydrogen bonds.

The PGME-based nano-zirconia organic dispersion has a refractive index of 1.396 when the concentration of nano-zirconia is 45 wt%, a refractive index of 1.442 when the concentration of nano-zirconia is 65%, and a refractive index of 1.480 when the concentration of nano-zirconia is 75 wt%.

### Comparative Example 6

Phenoxybenzyl acrylate was added to the PGME-based nano-zirconia organic dispersion prepared in Comparative Example 5, and the resulting mixture was subjected to vacuum distillation to remove the organic solvent to obtain a nano-zirconia dispersion containing photocurable phenoxybenzyl acrylate.

The dispersion has a refractive index of 1.570 when the content of nano-zirconia is 55 wt% and a refractive index of 1.594 when the content of nano-zirconia is 75 wt %.

### Comparative Example 7

The preparation method was the same as that in Example 5, except that the adding amounts of 12-hydroxystearic acid, 3-(methacryloyloxy)propyltrimethoxysilane, and the oil-based dispersing aid BYK-9076 were respectively 25% of the zirconium content, and a PGME-based nano-zirconia organic dispersion was obtained. The surface of zirconia particles has hydroxyl groups, Zr-O-Zr, Si-O-Zr, C-O ether bonds, ester carbonyl groups, and saturated carbon-hydrogen bonds, but does not have conjugated ester groups.

The PGME-based nano-zirconia organic dispersion has a refractive index of 1.398 when the concentration of nano-zirconia is 45 wt%, a refractive index of 1.447 when the concentration of nano-zirconia is 65%, and a refractive index of 1.481 when the concentration of nano-zirconia is 75 wt%.

### Comparative Example 8

Phenoxybenzyl acrylate was added to the PGME-based nano-zirconia organic dispersion prepared in Comparative Example 7, and the resulting mixture was subjected to vacuum distillation to remove the organic solvent to obtain a nano-zirconia dispersion containing photocurable phenoxybenzyl acrylate.

The dispersion has a refractive index of 1.567 when the content of nano-zirconia is 55 wt% and a refractive index of 1.591 when the content of nano-zirconia is 75 wt %.

### Comparative Example 9

The preparation method was the same as that in Example 1, except that the adding amounts of isooctanoic acid, 3-glycidyloxypropyltrimethoxysilane, and an oil-based dispersing aid BYK-9076 were respectively 30% relative to the zirconium content, and a PGME-based nano-zirconia organic dispersion was obtained. The surface of zirconia particles has hydroxyl groups, Zr-O-Zr, Si-O-Zr, C-O ether bonds, ester carbonyl groups, and saturated carbon-hydrogen bonds, but does not have conjugated ester groups.

The PGME-based nano-zirconia organic dispersion has a refractive index of 1.389 when the concentration of nano-zirconia is 45 wt%, a refractive index of 1.446 when the concentration of nano-zirconia is 65%, and a refractive index of 1.485 when the concentration of nano-zirconia is 75 wt%.

### Comparative Example 10

Phenoxybenzyl acrylate was added to the PGME-based nano-zirconia organic dispersion prepared in Comparative Example 9, and the resulting mixture was subjected to vacuum distillation to remove the organic solvent to obtain a nano-zirconia dispersion containing photocurable phenoxybenzyl acrylate.

The dispersion has a refractive index of 1.557 when the content of nano-zirconia is 55 wt% and a refractive index of 1.582 when the content of nano-zirconia is 75 wt %.

### Comparative Example 11

The preparation method was the same as that in Example 1, except that the adding amount of 3-(methacryloyloxy)propyltrimethoxysilane was 0, and a PGME-based nano-zirconia organic dispersion was obtained. The surface of zirconia particles has hydroxyl groups, Zr-O-Zr, and Si-O-Zr, but does not have ester carbonyl groups, C-O ether bonds, conjugated ester groups, and saturated carbon-hydrogen bonds.

The PGME-based nano-zirconia organic dispersion has a refractive index of 1.399 when the concentration of nano-zirconia is 45 wt%, a refractive index of 1.439 when the concentration of nano-zirconia is 65%, and a refractive index of 1.477 when the concentration of nano-zirconia is 75 wt%.

### Comparative Example 12

Phenoxybenzyl acrylate was added to the PGME-based nano-zirconia organic dispersion prepared in Comparative Example 11, and the resulting mixture was subjected to vacuum distillation to remove the organic solvent. The final product zirconia was precipitated, and a nano-zirconia dispersion containing photocurable phenoxybenzyl acrylate cannot be produced.

### Comparative Example 13

The preparation method was the same as that in Example 1, except that an oil-based dispersing aid DISPERBYK-111 (with the adding amount being 5% relative to the zirconium content) was added, and a PGME-based nano-zirconia organic dispersion was obtained. The surface of zirconia particles has hydroxyl groups, Zr-O-Zr, COOH, saturated carbon-hydrogen bonds, ester carbonyl groups, and C-O ether bonds, but does not have Si-O-Zr and conjugated ester groups.

The PGME-based nano-zirconia organic dispersion has a refractive index of 1.391 when the concentration of nano-zirconia is 45 wt%, a refractive index of 1.443 when the concentration of nano-zirconia is 65%, and a refractive index of 1.481 when the concentration of nano-zirconia is 75 wt%.

### Comparative Example 14

Phenoxybenzyl acrylate was added to the PGME-based nano-zirconia organic dispersion prepared in Comparative Example 13, and the resulting mixture was subjected to vacuum distillation to remove the organic solvent to obtain a nano-zirconia dispersion containing photocurable phenoxybenzyl acrylate.

The dispersion has a refractive index of 1.560 when the content of nano-zirconia is 55 wt% and a refractive index of 1.587 when the content of nano-zirconia is 75 wt %.

**Table 1 Summary of Differences of Examples 1-14 and Comparative Examples 1-14 as well as data of the resulting products**

| | Organic acid | Modifying agent | Oil-based dispersing aid | Refractive index of organic solvent-based dispersion (45%/65%/75%) | Sequence of adding modifying agents for organic solvent-based dispersion | | Refractive index of monomer dispersion |
|---|---|---|---|---|---|---|---|
| Example 1 | isooctanoic acid 5% | 10% | BYK-9076 (5%) | 1.475/1.535/1.565 | 1 : organic acid +modifying agent | Example 8 | 1.720 (85%) |
| | | | | | 2 : oil-based dispersing aid | | |
| Example 2 | isooctanoic acid 3% | 5% | BYK-9076 (10%) | 1.470/1.529/1.558 | 1 : organic acid +modifying agent | Example 9 | 1.706 (85%) |
| | | | | | 2 : oil-based dispersing aid | | |
| Example 3 | isooctanoic acid 12% | 15% | BYK-9077 (15%) | 1.461/1.522/1.552 | 1 : organic acid +modifying agent | Example 10 | 1.687 (85%) |
| | | | | | 2 : oil-based dispersing aid | | |
| Example 4 | isooctanoic acid 20% | 20% | BYK-9077 (20%) | 1.449/1.509/1.540 | 1 : organic acid +modifying agent | Example 11 | 1.662 (85%) |
| | | | | | 2 : oil-based dispersing aid | | |
| Example 5 | 12-hydroxystearic acid 5% | 10% | BYK-9076 (5%) | 1.467/1.525/1.554 | 1 : organic acid +modifying agent | Example 12 | 1.695 (85%) |
| | | | | | 2 : oil-based dispersing aid | | |
| Example 6 | acetic acid 5% | 10% | BYK-9076 (5%) | 1.420/1.498/1.530 | 1 : organic acid +modifying agent | Example 13 | 1.656 (85%) |
| | | | | | 2 : oil-based dispersing aid | | |
| Example 7 | propionic acid 5% | 10% | BYK-9076 (5%) | 1.457/1.513/1.548 | 1 : organic acid +modifying agent | Example 14 | 1.678 (85%) |
| | | | | | 2 : oil-based dispersing aid | | |
| Comparative Example 1 | isooctanoic acid 0 | 10% | BYK-9076 (5%) | 1.395/1.434/1.472 | 1 : modifying agent | Comparative Example 2 | failure |
| | | | | | 2 : oil-based dispersing aid | | |
| Comparative Example 3 | isooctanoic acid 5% | 10% | BYK-9076 (5%) | 1.398/1.445/1.484 | 1 : oil-based dispersing aid | Comparative Example 4 | 1.598 (75%) |
| | | | | | 2 : organic acid +modifying agent | | |
| Comparative Example 5 | 12-hydroxystearic acid 5% | 10% | BYK-9076 (5%) | 1.396/1.442/1.480 | 1 : oil-based dispersing aid | Comparative Example 6 | 1.594 (75%) |
| | | | | | 2 : organic acid +modifying agent | | |
| Comparative Example 7 | 12-hydroxystearic acid 25% | 25% | BYK-9076 (25%) | 1.398/1.447/1.481 | 1 : organic acid +modifying agent | Comparative Example 8 | 1.591 (75%) |
| | | | | | 2 : oil-based dispersing aid | | |
| Comparative Example 9 | isooctanoic acid 30% | 30% | BYK-9076 (30%) | 1.389/1.446/1.485 | 1 : organic acid +modifying agent | Comparative Example 10 | 1.582 (75%) |
| | | | | | 2 : oil-based dispersing aid | | |
| Comparative Example 11 | isooctanoic acid 5% | 0 | BYK-9076 (5%) | 1.399/1.439/1.477 | 1 : organic acid +modifying agent | Comparative Example 12 | failure |
| | | | | | 2 : oil-based dispersing aid | | |
| Comparative Example 13 | isooctanoic acid 5% | 10% | DISPERBYK-11 1 (5%) | 1.391/1.443/1.481 | 1 : organic acid +modifying agent | Comparative Example 14 | 1.587 (75%) |
| | | | | | 2 : oil-based dispersing aid | | |

The following is a comparative analysis of the examples and comparative examples of the present application:
When no organic acid (Comparative Example 1) or no modifying agent (Comparative Example 11) was added, the surfaces of zirconias in Comparative Examples 1 and 11 only contained Si-O-Zr provided by the oil-based dispersing aid due to the lack of mutual promotion of organic acid and modifying agent, which thereby resulted in failure of the preparation of monomer dispersions in Comparative Examples 2 and 12. This demonstrates that the effects of the organic acid, modifying agent, and oil-based dispersing aid on zirconia particles promote each other. The change brought by such a mutual promotion leads to different groups being grafted on the surface of zirconia particles, which in turn is critical to the successful preparation of dispersions.

In Comparative Examples 3 and 5, 5% of the oil-based dispersing aid BYK9076 was first added, resulting in insufficient active sites on the surface of zirconia. Isooctanoic acid and 12-hydroxystearic acid with long carbon chains have relatively large steric hindrance, and thus were very difficult to graft at the small amount of active sites on the surface of zirconia. Therefore, there was no saturated carbon-hydrogen bond in Comparative Examples 3 and 5, and their monomer dispersions contain nano-zirconia at the maximum content of 75 wt% and have the refractive index of 1.598 and 1.594, which are much lower than the refractive index of 1.641-1.700 of the 75 wt% monomer dispersions in Examples 8-14, not to mention the higher refractive index at 85 wt% in Examples 8-14. In Examples 1-7 of the present application, when the modifying agent and the organic acid were first added to conduct modification on zirconia particles, the surface of zirconia has sufficient active sites for an interaction with the organic acid and the modifying agent, achieving better modification and dispersing effects.

In Comparative Examples 7 and 9, since 12-hydroxystearic acid and isooctanoic acid which have electron-donating long carbon chains were added in large amounts (25% and 30%), the grafting of such a large number of electron-donating groups will directly weaken or even eliminate the electron deficiency of the zirconia center, so there will be no conjugated ester groups. As a result, their monomer dispersions contain nano-zirconia at the maximum content of 75 wt% and have the refractive index of merely 1.591 and 1.582. In the examples of the present application, the amount of the organic acid added is small, which is insufficient to offset the electron deficiency of the zirconia center, so there are conjugated ester groups.

The oil-based dispersing aid used in Example 1 is different from that in Comparative Example 13. In Comparative Example 13, there is a COOH peak on the surface of zirconia particles, but there are no Si-O-Zr and conjugated ester group peaks. This indicates that in Comparative Example 13, the organic acid and the modifying agent do not interact with zirconia through grafting, but are simply coated on the surface of zirconia. As a result, the refractive index of the solvent-based dispersion of each concentration in Comparative Example 13 is lower than that of Example 1. At the same time, the monomer dispersion in Comparative Example 14 contains nano-zirconia at the maximum content of 75 wt% and has the refractive index of 1.587, which is much lower than the refractive index of 1.700 of the 75 wt% monomer dispersion in Example 8, not to mention the higher refractive index at 85 wt% in Example 8. This shows that the oil-based dispersing aid BYK9076 has important influence on promoting the grafting of the organic acid and the modifying agent to zirconia particles, which in turn affects the quantity and type of groups grafted on the surface of zirconia particles, thereby significantly increasing the refractive index of the dispersion.

It can be seen that the preparation method provided in Examples 1-7 of the present application utilizes the mutual promotion of the organic acid, modifying agent, and oil-based dispersing aid on zirconia particles at the same time, controls the content of each reagent within the ranges provided by the examples of the present application, and achieves the grafting of expected functional groups on the surface of nano-zirconia particles, thus finally producing a nano-zirconia dispersion with good dispersing uniformity and high refractive index. The nano-zirconia dispersion can greatly increase the refractive index of high-refractive coatings in the subsequent process, such as preparation of brightness enhancing films or anti-reflective films, thereby improving film performance. From the refractive index data in Table 1, it can be concluded that for the solvent-based dispersion, under the same condition of 75 wt%, the refractive index of Examples 1-7 is 1.530-1.565, and the refractive index of Comparative Examples 1, 3, 5, 7, 9, 11, and 13 is 1.472-1.485, having a difference of 0.058-0.08. Although the difference in the refractive index is not very significant from the numerical value, but it is indeed a huge difference from the perspective of the refractive index of dispersion. For example, dispersions with a refractive index difference of 0.01 are respectively used to prepare brightness enhancing films, which are then applied on display screen, resulting in a light transmittance of 89% and 93%, which represents B-grade screen and A-grade screen, respectively.

## Claims

1. A nano-zirconia dispersion, **characterized in that** the nano-zirconia dispersion comprises nano-zirconia particles at an amount of 45-75 wt% and has a refractive index of 1.420-1.565, wherein it is observed that the nano-zirconia particles are surface-grafted with functional groups having respective peak ranges as follows when they are **characterized by** infrared spectroscopy:
hydroxyl group: 3200 cm⁻¹-3600 cm⁻¹, Zr-O-Zr: 480 cm⁻¹-850 cm⁻¹, saturated carbon-hydrogen bond: 2850 cm⁻¹-2960 cm⁻¹, ester carbonyl group: 1700 cm⁻¹-1750 cm⁻¹, delocalized conjugated ester group: 1460 cm⁻¹-1580 cm⁻¹, Si-O-Zr: 800 cm⁻¹-1200 cm⁻¹, and C-O ether bond: 1000 cm⁻¹-1200 cm⁻¹.

2. The nano-zirconia dispersion according to claim 1, **characterized in that** the nano-zirconia dispersion has a refractive index of 1.420-1.535 when the nano-zirconia dispersion comprises 45%-65% of zirconia and a refractive index of 1.498-1.565 when the nano-zirconia dispersion comprises 65%-75% of zirconia.

3. The nano-zirconia dispersion according to claim 1 or 2, **characterized in that** the refractive index of nano-zirconia particles in the nano-zirconia dispersion is 2.20-2.60, and the nano-zirconia particles with a tetragonal crystal structure account for 60-95% of all the nano-zirconia particles.

4. A preparation method of the nano-zirconia dispersion according to claim 1, **characterized by** comprising the following steps:
adding an organic solvent to an aqueous zirconia solution and uniformly mixing, adding an organic acid and a modifying agent to the resulting system to conduct modification on zirconia particles, then adding an oil-based dispersing aid, removing water by rotary evaporation to obtain the nano-zirconia dispersion;
wherein the organic acid added is 3-20 wt% relative to the content of nano-zirconia; the modifying agent added is 5-20 wt% relative to the content of nano-zirconia; the oil-based dispersing aid added is 5-20 wt% relative to the content of nano-zirconia.

5. The preparation method according to claim 4, **characterized in that** adding the organic acid and the modifying agent to the resulting system to conduct the modification on the zirconia particles specifically comprises:
under normal pressure and 50-150°C, adding the organic acid and the modifying agent to the resulting system to conduct the modification on the zirconia particles; or
dissolving the organic acid and the modifying agent in the organic solvent, followed by adding to the dispersion, which is obtained by mixing the aqueous zirconia solution and the organic solvent, under normal pressure and 50-150°C to conduct the modification on the zirconia particles.

6. The preparation method according to claim 4, **characterized in that** the organic solvent is at least one of butanone, methyl isobutyl ketone, propylene glycol methyl ether, and ethylene glycol methyl ether; a volume ratio of the organic solvent added to the aqueous zirconia solution is (3-5):1.

7. The preparation method according to claim 4, **characterized in that** the organic acid is at least one selected from a saturated or unsaturated monocarboxylic acid, a polycarboxylic acid, and a hydroxycarboxylic acid.

8. The preparation method according to claim 7, **characterized in that** the monocarboxylic acid is at least one selected from formic acid, acetic acid, propionic acid, butyric acid, isooctanoic acid, acrylic acid, and methacrylic acid; the polycarboxylic acid is at least one selected from oxalic acid, malonic acid, succinic acid, phthalic acid, fumaric acid, and maleic acid; the hydroxycarboxylic acid is at least one selected from lactic acid, malic acid, tartaric acid, and citric acid.

9. The preparation method according to claim 4, **characterized in that** the modifying agent is at least one of 3-(methacryloyloxy)propyltrimethoxysilane and 3-glycidyloxypropyltrimethoxysilane.

10. The preparation method according to claim 4, **characterized in that** the oil-based dispersing aid is at least one selected from an anionic dispersant, a cationic dispersant, a non-ionic dispersant, and a polymeric dispersant.

11. The preparation method according to claim 4, **characterized in that** the oil-based dispersing aid is selected from BYK-9076 or BYK-9077.

12. A nano-zirconia monomer dispersion, **characterized in that** it is prepared by adding a photocurable resin to the nano-zirconia dispersion according to any of claims 1-3 and removing the organic solvent from the dispersion through vacuum distillation.

13. The nano-zirconia monomer dispersion according to claim 12, **characterized in that** the nano-zirconia monomer dispersion comprises 55-85 wt% of nano-zirconia and has a refractive index of 1.620-1.720.

14. The nano-zirconia monomer dispersion according to claim 12, **characterized in that** the photocurable resin is selected from an acrylic or methacrylic monomer containing ester, ethyl carbamate, ether, silicon, halogen and/or phosphorus-containing groups or an oligomer of the acrylic or methacrylic monomer; an amount of the photocurable resin added is 15-45 wt% relative to the total mass of the zirconia and the photocurable resin.

15. The nano-zirconia monomer dispersion according to claim 14, **characterized in that** the photocurable resin is at least one of phenoxybenzyl acrylate, methyl acrylate, and methyl methacrylate.

16. An optical film, **characterized in that** it is prepared by using the nano-zirconia dispersion according to any of claims 1-3 or using the nano-zirconia monomer dispersion according to any of claims 12-15.
